# EUROPÄISCHE PATENTANMELDUNG

(11) **EP 3 269 622 A2**
(43) Veröffentlichungstag der Anmeldung: **17.01.2018**
(21) Anmeldenummer: 17180218.4
(22) Anmeldetag: 07.07.2017
(51) Int. Cl.: B62D 35/00, B62D 37/02

(54) **LUFTABLENKVORRICHTUNG FÜR EIN KRAFTFAHRZEUG**

(30) Priorität: 14.07.2016 DE 202016103806 U
(71) Anmelder: REHAU AG + Co, 95111 Rehau (DE)
(72) Erfinder: Löffler, Andreas, 95111 Rehau (DE); Müller, Claus, 95028 Hof (DE)

(57) **Zusammenfassung**

Die vorliegende Erfindung bezieht sich auf eine Luftablenkvorrichtung, insbesondere Heckspoiler, für ein Kraftfahrzeug umfassend ein längliches Ablenkschild (1) mit größerer Längserstreckung (L) als Quererstreckung (Q) zum Ablenken von Luft, das zwischen einer Nichtgebrauchsstellung (R) und zumindest einer Gebrauchsstellung (E, E') reversibel in Längs- und/oder Höhenrichtung des Kraftfahrzeuges verfahrbar ist und wenigstens eine Linear-Antriebseinheit (3) mit einem Antriebsaggregat (4) zum Verfahren des Ablenkschildes (1), und eine Tragstruktur (5) zur Verbindung des Ablenkschildes (1) mit dem Kraftfahrzeug und wenigstens eine Lagervorrichtung (2), die das Ablenkschild (1) mit der Tragstruktur (5) verbindet und auf welcher das Ablenkschild (1) in Relation zu dem Kraftfahrzeug verfahrbar gelagert ist. Es ist wenigstens ein längliches und biegsames Kraftübertragungselement (6) zur Übertragung und Weiterleitung von Schubkräften und Zugkräften der Linear-Antriebseinheit (3) vorgesehen, wobei ein erster Abschnitt (7) des Kraftübertragungselementes (6) zur Übertragung der linearen Verstellbewegung der Linear-Antriebseinheit (3) mit der Linear-Antriebseinheit (3) verbunden ist und, wobei zum Verfahren des Ablenkschildes (1) ein von dem ersten Abschnitt (7) beabstandeter zweiter Abschnitt (8) des Kraftübertragungselementes (6) mit der Lagervorrichtung (2) und/oder mit dem Ablenkschild (1) verbunden ist und/oder mit der Lagervorrichtung (2) und/oder mit dem Ablenkschild (1) in Wirkverbindung steht, wobei das Kraftübertragungselement (6) innerhalb einer Führungskulisse (10) geführt und reversibel verfahrbar ist, wobei die Führungskulisse (10) derart ausgebildet ist, dass das Kraftübertragungselement (6) durch die Führungskulisse (10) wenigstens eine Umlenkung erfährt, sodass die lineare Verstellbewegung der Linear-Antriebseinheit (3) gleichermaßen umgelenkt wird.

## Beschreibung

Die vorliegende Erfindung betrifft eine Luftablenkvorrichtung, insbesondere Heckspoiler, für ein Kraftfahrzeug umfassend
- ein längliches Ablenkschild mit größerer Längserstreckung als Quererstreckung zum Ablenken von Luft, dass zwischen einer Nichtgebrauchsstellung und zumindest einer Gebrauchsstellung reversibel in Längs- und/oder Höhenrichtung des Kraftfahrzeuges verfahrbar ist, und
- umfassend wenigstens eine Linear-Antriebseinheit mit einem Antriebsaggregat zum Verfahren des Ablenkschildes, und
- umfassend eine Tragstruktur zur Verbindung des Ablenkschildes mit dem Kraftfahrzeug, und
- umfassend wenigstens eine Lagervorrichtung, die das Ablenkschild mit der Tragstruktur verbindet und auf welcher das Ablenkschild in Relation zu dem Kraftfahrzeug verfahrbar gelagert ist.

Eine gattungsgemäße Luftablenkvorrichtung ist der Offenlegungsschrift DE 10 2015 121 030 A1 zu entnehmen. Nachteilig an der hier offenbarten Luftablenkvorrichtung ist, dass der maximale Verfahrweg des Ablenkschildes dadurch begrenzt ist, dass die Linear-Antriebseinheit in Richtung der Verfahrbewegung des Ablenkschildes positioniert ist und insofern der Verfahrweg durch den Bauraum in Richtung der Quererstreckung des Ablenkschildes limitiert ist. Ein weiteres Problem besteht dahingehend, dass für ein verkantungsfreies Ausfahren des Ablenkschildes gemäß dem Stand der Technik wenigstens zwei Linear-Antriebseinheiten vorhanden sein müssen. Diese werden jedoch separat angetrieben, sodass die hierfür erforderlichen Antriebsaggregate bezüglich ihrer jeweiligen Verfahrwege aufwendig aufeinander abgestimmt werden müssen, damit das Ablenkschild von beiden Linear-Antriebseinheiten gleichmäßig ausgefahren wird und sich nicht verkantet.

Aufgabe der vorliegenden Erfindung ist es daher, eine Luftablenkvorrichtung gemäß des Stands der Technik so weiterzuentwickeln, dass größere Verfahrwege des Ablenkschildes möglich sind und gleichzeitig der Antrieb vereinfacht ist.

Die vorliegende Aufgabe wird erfüllt durch eine Luftablenkvorrichtung, insbesondere Heckspoiler, für ein Kraftfahrzeug umfassend:
- ein längliches Ablenkschild mit größerer Längserstreckung als Quererstreckung zum Ablenken von Luft, das zwischen einer Nichtgebrauchsstellung und zumindest einer Gebrauchsstellung reversibel in Längs- und/oder Höhenrichtung des Kraftfahrzeuges verfahrbar ist, und
- wenigstens eine Linear-Antriebseinheit mit einem Antriebsaggregat zum Verfahren des Ablenkschildes, und
- eine Tragstruktur zur Verbindung des Ablenkschildes mit dem Kraftfahrzeug, und
- wenigstens eine Lagervorrichtung, die das Ablenkschild mit der Tragstruktur verbindet und auf welcher das Ablenkschild in Relation zu dem Kraftfahrzeug verfahrbar gelagert ist,
   wobei erfindungsgemäß wenigstens ein längliches und biegsames Kraftübertragungselement zur Übertragung und Weiterleitung von Schubkräften und Zugkräften der Linear-Antriebseinheit vorgesehen ist, wobei ein erster Abschnitt des Kraftübertragungselementes zur Übertragung der linearen Verstellbewegung der Linear-Antriebseinheit mit der Linear-Antriebseinheit verbunden ist und,
   wobei zum Verfahren des Ablenkschildes ein von dem ersten Abschnitt beabstandeter zweiter Abschnitt des Kraftübertragungselementes mit der Lagervorrichtung und/oder mit dem Ablenkschild verbunden ist und/oder mit der Lagervorrichtung und/oder mit dem Ablenkschild in Wirkverbindung steht und,
   wobei das Kraftübertragungselement innerhalb einer Führungskulisse geführt und reversibel verfahrbar ist, wobei die Führungskulisse derart ausgebildet ist, dass das Kraftübertragungselement durch die Führungskulisse wenigstens eine Umlenkung erfährt, sodass die lineare Verstellbewegung der Linear-Antriebseinheit gleichermaßen umgelenkt wird.

Durch das erfindungsgemäße Vorsehen eines länglichen und biegsamen Kraftübertragungselements, welches innerhalb einer Führungskulisse geführt und reversibel verfahrbar ist, wobei die Führungskulisse derart ausgebildet ist, dass das Kraftübertragungselement durch die Führungskulisse wenigstens eine Umlenkung erfährt, ist es möglich, durch eine relativ geringe Anzahl von Bauelementen die Linear-Antriebseinheit so innerhalb der Luftablenkvorrichtung zu positionieren, dass der in Längserstreckung des Ablenkschildes wesentlich größere Bauraum nutzbar wird. Gleichzeitig wird durch die örtliche Trennung der Lagervorrichtung zu der Linear-Antriebseinheit die Möglichkeit eröffnet, die Ausfahrlänge des Ablenkschildes weiter zu vergrößern, da der Bauraum für die Linear-Antriebseinheit nicht im Verfahrweg der Lagervorrichtung liegt. Der maximale Verfahrweg der wenigstens einen Lagervorrichtung ergibt sich zudem aus der Länge des Kraftübertragungselementes zwischen dem ersten Abschnitt und dem zweiten Absschnitt und ist nicht durch die Abmessungen des Ablenkschildes in Querrichtung limitiert. Zdem kann der Verfahrweg durch die Variation dieses Abstandes relativ einfach verändert, justiert oder angepasst werden.

Der zweite Abschnitt des Kraftübertragungselementes kann über ein Verbindungsmittel mit der Lagervorrichtung und/oder mit dem Ablenkschild verbunden sein und/oder mit der Lagervorrichtung und/oder mit dem Ablenkschild in Wirkverbindung stehen.

Die Linear-Antriebseinheit kann wenigstens einen Spindelantrieb mit wenigstens einer Leitspindel aufweisen. Der erste Abschnitt des Kraftübertragungselementes kann hierbei zur Übertragung der linearen Verstellbewegung über eine Antriebsmutter mit der Leitspindel des Spindelantriebs verbunden sein. Die Verwendung eines Spindelantriebes stellt eine besonders robuste, und durch seinen mechanischen Aufbau einfache, Linear-Antriebseinheit dar.

Die Linear-Antriebseinheit, insbesondere die Leitspindel eines Spindelantriebs bei der Verwendung eines Spindelantriebs als Linear-Antriebseinheit, kann in einem Winkel zwischen 0° bis 60°, bevorzugt 0° bis 45°, besonders bevorzugt 0° bis 30° zur Richtung der Längserstreckung des Ablenkschildes angeordnet sein. Der besondere Vorteil der Erfindung besteht darin, dass die Linear-Antriebseinheit, insbesondere die Leitspindel, nicht parallel zur Ausfahrrichtung des Ablenkschildes angeordnet sein muss, wie dies im Stand der Technik notwendig ist, sondern bevorzugt parallel oder in einem spitzen Winkel unterhalb von 60° zur Längserstreckung des Ablenkschildes angeordnet ist.

Das Kraftübertragungselement kann stangenförmig, wellenförmig oder bandförmig ausgebildet sein. Wichtig ist hierbei, dass das Kraftübertragungselement in wenigstens einer Raumebene mit einer geringen Kraft biegsam ausgebildet ist.

Das Kraftübertragungselement besteht bevorzugt aus einem metallischen Werkstoff, insbesondere aus einem Federstahl.

Die Tragstruktur kann zur Aufnahme und Halterung der Linear-Antriebseinheit dienen.

Das Kraftübertragungselement kann mehrgliedrig aufgeteilt sein, wobei ein erster gemeinsamer Abschnitt des mehrgliedrigen Kraftübertragungselementes mit der Linear-Antriebseinheit, insbesondere mit der Leitspindel des Spindelantriebes, verbunden ist und zumindest die zweiten Abschnitte des mehrgliedrigen Kraftübertragungselementes innerhalb von separaten Führungskulissen geführt und verfahrbar sind. Ein mehrgliedrig aufgeteiltes Kraftübertragungselement bietet die vorteilhafte Möglichkeit, mittels einer Linear-Antriebseinheit durch das sich aufteilende Kraftübertragungselement mehrere Lagervorrichtungen und/oder mehrere Abschnitte des Ablenkschildes gleichzeitig zu verfahren, sodass die auf das Ablenkschild wirkenden Zug- und Schubkräfte gleichmäßig verteilt werden können.

Das Ablenkschild kann über wenigstens ein lösbares Verbindungsmittel mit der wenigstens einen Lagervorrichtung verbunden sein und in wenigstens der zumindest einen Gebrauchsstellung kann das Verbindungsmittel von außen zugänglich und lösbar sein. Eine entsprechende Ausbildung der Luftablenkvorrichtung ermöglicht es die Verfahrmöglichkeit zwischen einer Nichtgebrauchsstellung und einer Gebrauchsstellung des Ablenkschildes dafür zu nutzen, dass das Ablenkschild relativ einfach getauscht oder gewechselt werden kann. Der Tausch kann zum einen durch eine Reparatur bedingt sein. Ermöglicht wird durch die einfache Demontage des Ablenkschildes aber auch das Ablenkschild durch ein anderes ausgebildetes Ablenkschild zu ersetzen, welches zum Beispiel eine andere Gestalt, Funktion oder Farbgestaltung aufweist.

Vorteilhafterweise kann das Ablenkschild aus einer Gruppe von verschiedenen Ablenkschilden ausgewählt sein, wobei die Tragstruktur, die Linear-Antriebseinheit und die Lagervorrichtung mit jedem der Ablenkschilde kompatibel ist.

Die wenigstens eine Lagervorrichtung kann eine Gleitschiene, ein Führungsprofil, ein Gleitprofil, eine Riemenführung, eine Kettengleitschiene, eine Walzengleitschiene, eine Teleskopschiene, eine Rollenschiene, eine Kugelrollenschiene und/oder eine Kugellagerschiene umfassen. Insbesondere Gleitschienen, Führungsprofile, Gleitprofile, Riemenführungen, Kettengleitschienen, Walzengleitschienen, Teleskopschienen, Rollenschienen, Kugelrollenschienen und/oder Kugellagerschienen, die sich über mehr als das Doppelte ihrer zusammengefahrenen Länge ausfahren können, sind besonders vorteilhaft, da diese einen Verfahrweg des Ablenkschildes ermöglichen, der über das hinausgeht, was der Länge des Ablenkschildes in Richtung seiner Quererstreckung entspricht.

Besonders bevorzugt kann die wenigstens eine Lagervorrichtung einen winklig oder bogenförmig ansteigenden End- und/oder Mittelabschnitt aufweisen. Hierdurch wird es ermöglicht das Ablenkschild nicht nur in Längsrichtung des Kraftfahrzeuges, sondern auch in Höhenrichtung des Kraftfahrzeuges zu verfahren.

Die Tragstruktur und/oder das Ablenkschild bestehen bevorzugt aus einem polymeren Werkstoff oder aus unterschiedlichen polymeren Werkstoffen. Der polymere Werkstoff oder die polymeren Werkstoffe können insbesondere thermoplastische Werkstoffe umfassen.

In einer bevorzugten Variante sind wenigstens zwei Kraftübertragungselemente, wenigstens zwei Führungskulissen, wenigstens zwei Lagervorrichtungen und wenigstens zwei Leitspindeln vorgesehen, wobei die Kraftübertragungselemente jeweils in unterschiedlichen Führungskulissen geführt sind und die ersten Abschnitte der Kraftübertragungselemente jeweils mit unterschiedlichen Leitspindeln verbunden sind und die zweiten Abschnitte der beiden Kraftübertragungselemente jeweils mit unterschiedlichen Lagervorrichtungen und/oder unterschiedlichen Bereichen des Ablenkschildes verbunden sind und/oder mit unterschiedlichen Lagervorrichtungen und/oder mit unterschiedlichen Bereichen des Ablenkschildes in Wirkverbindung stehen. Hierbei weist besonders bevorzugt eine Leitspindel ein linksdrehendes Gewinde und die wenigstens zweite Leitspindel ein rechtsdrehendes Gewinde auf. Die beiden Leitspindeln sind weiter bevorzugt gleichzeitig mit demselben Antriebsaggregat in Drehung versetzbar. Insbesondere können die beiden Leitspindeln auf einer gemeinsamen Achse angeordnet sein. Eine Synchronisation von verschiedenen Antriebsaggregaten, wie dies in einer Luftablenkvorrichtung gemäß des Stands der Technik erforderlich ist, entfällt hierdurch vorteilhaft, da ein und dasselbe Antriebsaggregat für die Verfahrbewegung der beiden Kraftübertragungselemente in ihren Führungskulissen zuständig ist.

Die Führungskulisse oder die Führungskulissen können elliptisch, kurvenförmig, bogenförmig und/oder teilkreisbogenförmig ausgebildet sein. Die Führungskulisse oder die Führungskulissen sind bevorzugt so ausgebildet, dass das Kraftübertragungselement oder das die Kraftübertragungselemente in einem Winkel von 30° bis 120°, bevorzugt 45° bis 105°, besonders bevorzugt 60° bis 90° zu der Richtung der linearen Verstellbewegung der Linear-Antriebseinheit umgelenkt werden.

Die Führungskulisse oder die Führungskulissen können einteilig mit der Tragstruktur oder mit dem Ablenkschild ausgebildet und/oder stoffschlüssig mit der Tragstruktur oder mit dem Ablenkschild verbunden sein.

Die Führungskulisse oder die Führungskulissen können gemeinsam durch einen Teilbereich der Tragstruktur und durch einen Teilbereich des Ablenkschildes ausgebildet sein. Bei der Verbindung der Tragstruktur mit dem Ablenkschild können die entsprechenden Teilbereiche der beiden Elemente gemeinschaftlich die Führungskulisse ausbilden. Alternativ kann die Führungskulisse durch einen Teilbereich der Tragstruktur und durch einen Teilbereich des an die Tragstruktur angrenzenden Karosserieteils des Kraftfahrzeuges ausgebildet sein.

Die Führungskulisse oder die Führungskulissen können aus einem polymeren Werkstoff bestehen. Hierbei können die Führungskulisse oder können die Führungskulissen abschnittsweise oder vollständig aus einem anderen polymeren Werkstoff als dem polymeren Werkstoff der Tragstruktur und/oder des Ablenkschilds gebildet sein, für den Fall, dass die Tragstruktur und/oder das Ablenkschild aus einem oder aus verschiedenen polymeren Werkstoffen bestehen.

Der polymere Werkstoff der Führungskulisse oder der Führungskulissen oder der andere polymere Werkstoff kann insbesondere einen thermoplastischen Werkstoff, besonders bevorzugt Polyamid, Polyimid, Polyoxymethylen, Polyacetat, Polyurethan, Polyvinylchlorid, Polyvinylidenflourid und/oder Polytetrafluorethylen umfassen.

Die Führungskulissen oder die Führungskulissen können alternativ oder zusätzlich aus einem metallischen Werkstoff bestehen.

Das Antriebsaggregat umfasst bevorzugt einen Elektromotor, einen Hydraulikzylinder, einen Pneumatikzylinder, einen Spindelmotor, einen Zahnstangenantrieb oder einen Linear-Spindelantrieb.

Die Tragstruktur kann als Teil einer Heckklappe oder als Teil einer Dachstruktur oder als ein eigenständiges Element ausgebildet sein.

Weiterhin ein Teil der Erfindung ist ein Kraftfahrzeug mit einer vorstehend beschriebenen Luftablenkvorrichtung.

Die Erfindung wird anhand nachfolgend beschriebener Ausführungsbeispiele näher erläutert. Gleiche Elemente oder funktionsgleiche Elemente sind mit den gleichen Bezugszeichen versehen.

Es zeigen:
- Fig. 1 bis Fig. 3: eine Luftablenkvorrichtung in verschiedenen Gebrauchsstellungen;
- Fig. 4: die Luftablenkvorrichtung nach Fig. 1 ohne Ablenkschild;
- Fig. 5: die Luftablenkvorrichtung nach Fig. 3 ohne Ablenkschild;
- Fig. 6: die Luftablenkvorrichtung nach Fig. 5 ohne Tragstruktur;
- Fig. 7: eine Draufsicht auf die Luftablenkvorrichtung ohne Ablenkschild;
- Fig. 8: eine Untenansicht auf die Luftablenkvorrichtung;
- Fig. 9: die Lage der Schnittlinien A-A und B-B durch die Luftablenkvorrichtung;
- Fig. 10: die Querschnittsdarstellung gemäß Schnitt A-A in Fig. 9;

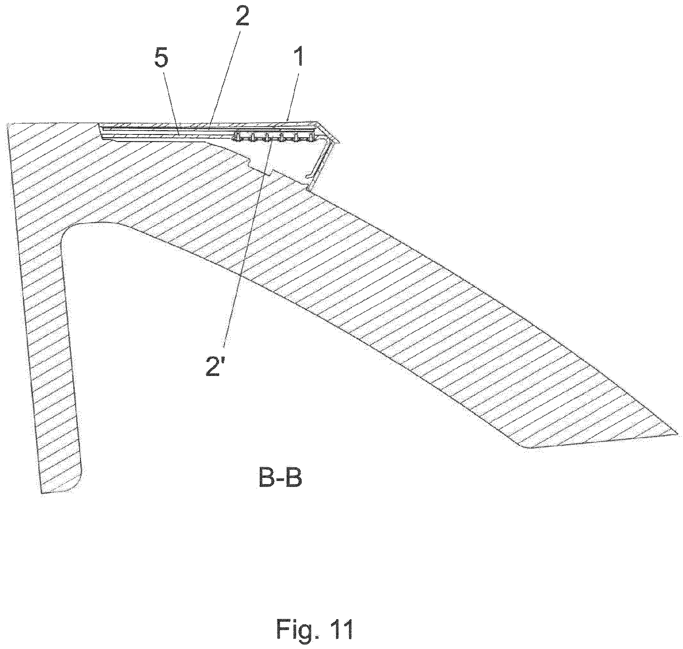

- Fig. 11: die Querschnittsdarstellung gemäß Schnitt B-B in Fig. 9;
- Fig. 12: eine Untenansicht der Luftablenkvorrichtung in einer ausgefahrenen Gebrauchsstellung des Ablenkschildes;
- Fig. 13: eine Variante der Ablenkvorrichtung mit einem mehrgliedrigen Kraftübertragungselement.

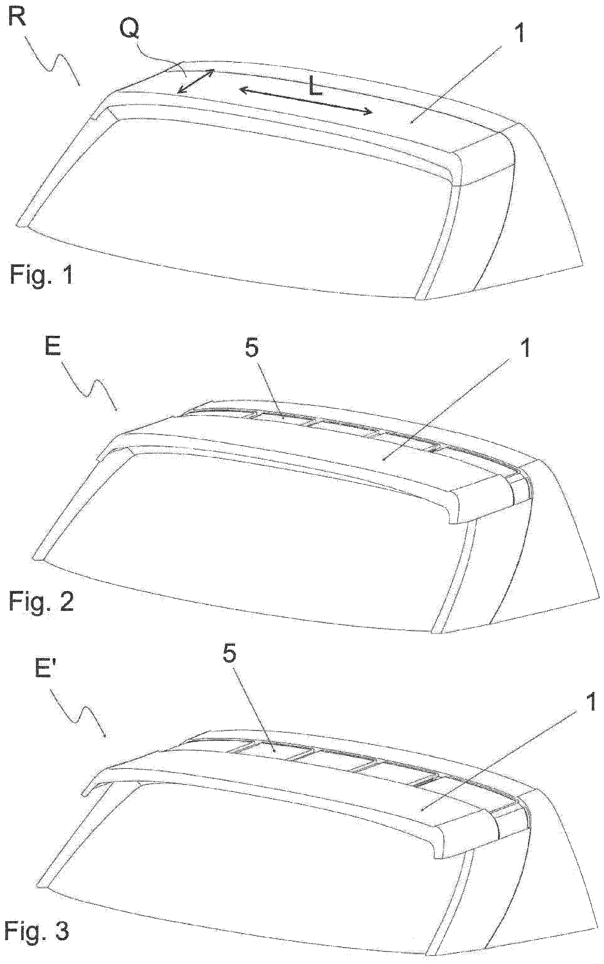

Die Fig. 1 bis Fig. 3 zeigen eine Luftablenkvorrichtung, insbesondere Heckspoiler, für ein Kraftfahrzeug umfassend ein längliches Ablenkschild 1 mit größerer Längserstreckung L als Querstreckung Q zum Ablenken von Luft. Das längliche Ablenkschild 1 ist zwischen einer Nichtgebrauchsstellung R (vgl. Fig. 1) und zumindest einer Gebrauchsstellung E (vgl. Fig. 2) bzw. E' (vgl. Fig. 3) reversibel in Längs- und/oder Höhenrichtung des Kraftfahrzeugs verfahrbar. In den Figuren 1 bis 3 ist die reversible Längsrichtungsverstellung bzgl. des hier nicht näher dargestellten Kraftfahrzeuges dargestellt. Zur Verbindung des Ablenkschildes 1 mit dem Kraftfahrzeug umfasst die Luftablenkvorrichtung eine Tragstruktur 5. Nicht näher dargestellt ist wenigstens eine Lagervorrichtung 2, die das Ablenkschild 1 mit der Tragstruktur 5 verbindet und auf welcher das Ablenkschild 1 in Relation zu dem Kraftfahrzeug verfahrbar gelagert ist.

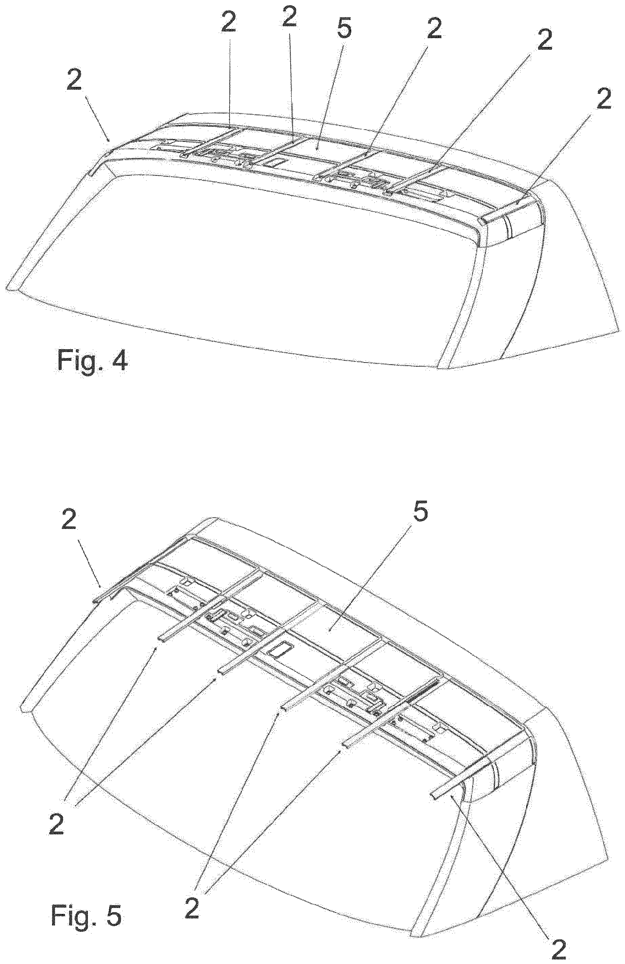

In Fig. 4 ist die Luftablenkvorrichtung gemäß der Fig. 1 in der Nichtgebrauchsstellung R dargestellt, wobei im Vergleich zu der Fig. 1 das Ablenkschild 1 ausgeblendet und nicht sichtbar ist. In Fig. 4 sind daher die wenigstens eine Lagervorrichtung 2 sowie die Tragstruktur 5 zur Verbindung des Ablenkschilds 1 mit dem Kraftfahrzeug zu erkennen. Die Lagervorrichtungen 2 verbinden das Ablenkschild 1 mit der Tragstruktur 5 und sind so ausgebildet, dass das Ablenkschild 1 auf den Lagervorrichtungen in Relation zu dem Kraftfahrzeug verfahrbar gelagert sind.

Die Fig. 5 zeigt entsprechend der Fig. 3 die Luftablenkvorrichtung in der Gebrauchsstellung E', wobei hier ebenfalls zur besseren Verdeutlichung das Ablenkschild 1 ausgeblendet und nicht sichtbar ist. Wie in Fig. 5 ersichtlich, befinden sich die Lagervorrichtungen 2 nunmehr gegenüber den Lagervorrichtungen in Fig. 4 in einem ausgefahrenen Zustand.

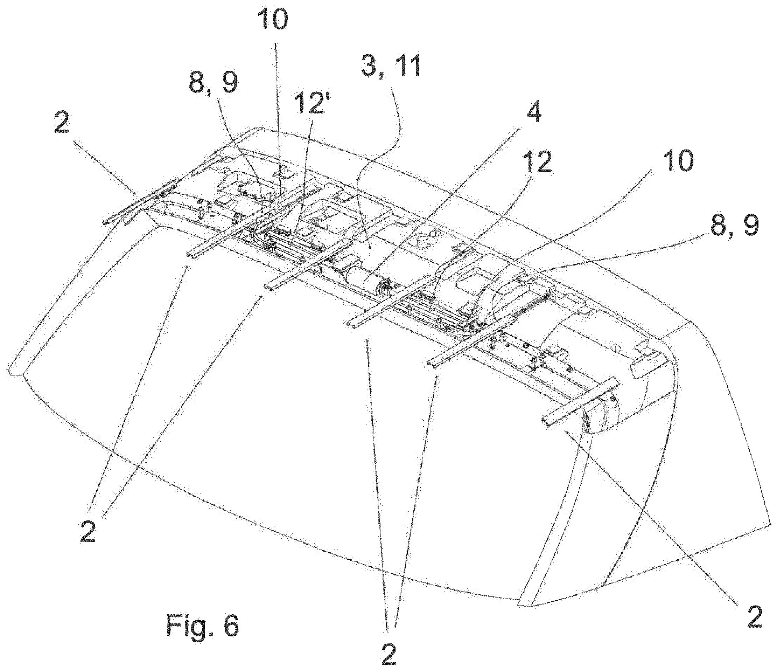

Zur weiteren Verdeutlichung des Aufbaus der erfindungsgemäßen Luftablenkvorrichtung zeigt nunmehr die Fig. 6 im Vergleich zu der Fig. 5 die sich unterhalb der Tragstruktur 5 befindlichen Elemente, wobei hierzu in Fig. 6 die Tragstruktur 5 ausgeblendet und nicht sichtbar ist. In Fig. 6 ist die wenigstens eine Linear-Antriebseinheit 3 mit einem Antriebsaggregat 4 zum Verfahren des Ablenkschildes 1 erkennbar. Die Linear-Antriebseinheit 3 weist einen Spindelantrieb 11 mit zwei Leitspindeln 12, 12' auf. Erfindungsgemäß sind längliche und biegsame Kraftübertragungselemente 6 (hier nicht erkennbar) zur Übertragung und Weiterleitung von Schubkräften und Zugkräften der Linear-Antriebseinheit 3 vorgesehen. Ein erster Abschnitt 7 des Kraftübertragungselements 6 ist hierbei zur Übertragung der linearen Verstellbewegung der Linear-Antriebseinheit 3 mit der Linear-Antriebseinheit 3 verbunden. Zum Verfahren des Ablenkschildes 1 ist ein von dem ersten Abschnitt 7 beanstandeter zweiter Abschnitt 8 des Kraftübertragungselementes 6 über ein Verbindungsmittel 9 mit der Lagervorrichtung 2 bzw. mit den Lagervorrichtungen 2 verbunden. Alternativ oder in Kombination kann der zweite Abschnitt 8 des Kraftübertragungselementes 6 auch mit dem Ablenkschild 1 direkt verbunden sein und/oder mit der Lagervorrichtung 2 und/oder mit dem Ablenkschild 1 in Wirkverbindung stehen. Die Kraftübertragungselemente 6 sind jeweils innerhalb einer Führungskulisse 10 geführt und reversibel verfahrbar, wobei die Führungskulissen 10 derart ausgebildet sind, dass das Kraftübertragungselement 6 durch die Führungskulissen 10 wenigstens eine Umlenkung erfahren, sodass die lineare Verstellbewegung der Linear-Antriebseinheit 3 gleichermaßen umgelenkt wird. Die Leitspindeln 12, 12' sind in einem Winkel von 0°, d.h. parallel zur Richtung der Längserstreckung L des Ablenkschildes 1 angeordnet. Das Antriebsaggregat 4 umfasst einen Elektromotor oder einen Spindelmotor. Die Führungskulissen 10 sind teilkreisbogenförmig ausgebildet. Die Führungskulissen 10 sind ferner so ausgebildet, dass das Kraftübertragungselement 6 bzw. die Kraftübertragungselemente 6 in einem Winkel von 90° zu der Richtung der linearen Verstellbewegung der Linear-Antriebseinheit 3 umgelenkt werden.

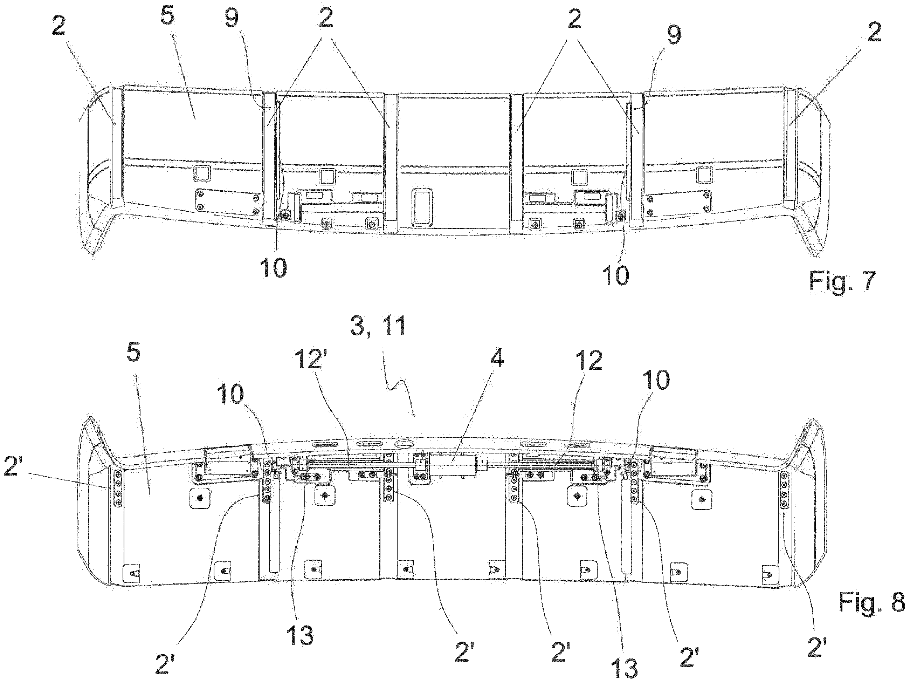

Die Fig. 7 zeigt die Luftablenkvorrichtung in einer Draufsicht von oben (im bestimmungsgemäßem Verbauzustand am Kraftfahrzeug), wobei zur besseren Verdeutlichung ebenfalls das Ablenkschild 1 ausgeblendet und insofern nicht sichtbar ist. Ersichtlich sind wieder die Lagervorrichtungen 2, über die das Ablenkschild 1 mit der Tragstruktur 5 verbunden sind und auf welcher das Ablenkschild 1 in Relation zu dem Kraftfahrzeug verfahrbar gelagert ist. In der Fig. 7 ist zudem ein Teil der Führungskulissen 10 erkennbar sowie die Verbindungsmittel 9, mit denen die Kraftübertragungselemente 6 (hier nicht erkennbar) über die zweiten Abschnitte 8 mit den Lagervorrichtungen 2 verbunden sind. Man erkennt, dass nicht alle Lagervorrichtungen 2 aktiv angetrieben bzw. verfahren werden, sondern jeweils nur die zweite von links bzw. zweite von rechts.

Die Fig. 8 zeigt nunmehr die Untenansicht der Luftablenkvorrichtung gemäß Fig. 7 mit der Linear-Antriebseinheit 3, die einen Spindelantrieb 11 mit einer ersten Leitspindel 12 und einer zweiten Leitspindel 12' aufweist. Die Lagervorrichtungen 2 weisen ortsfeste Lagersteine oder Lagergleitelemente 2' auf, die mit der Tragstruktur 5 verbunden sind. Auf diesen Lagergleitelementen 2' gleitet und verfährt die Lagervorrichtung 2. Zur Übertragung der linearen Verstellbewegung sind die ersten Abschnitte 7 des Kraftübertragungselementes 6 (hier nicht erkennbar) über jeweils eine Antriebsmutter 13 mit den Leitspindeln 12, 12' des Spindelantriebs 11 verbunden.

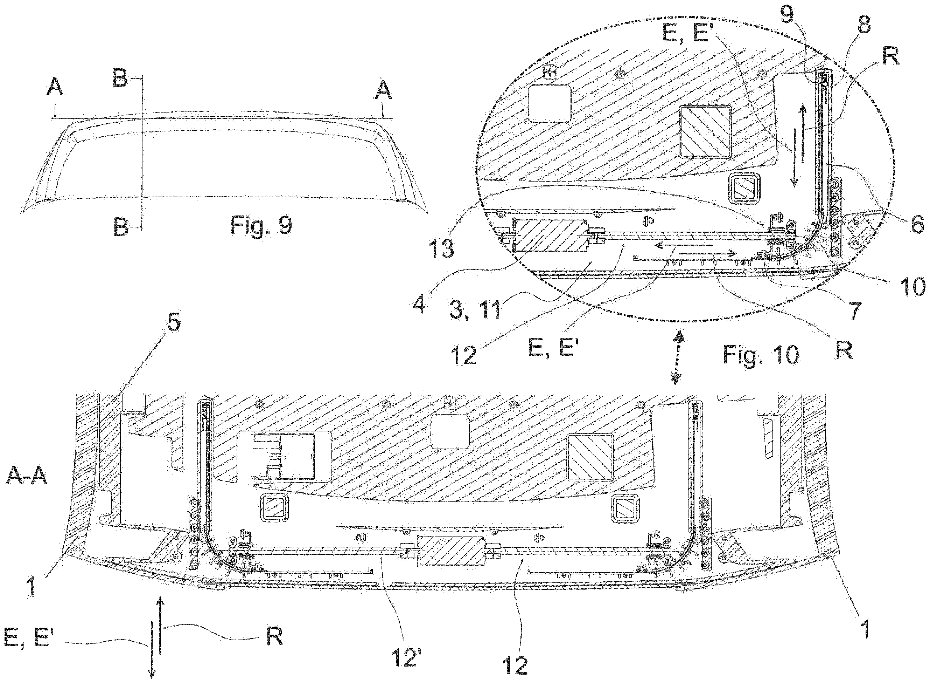

In Fig. 9 ist die Lage der Schnittlinien A-A und B-B durch die Luftablenkvorrichtung gemäß der vorstehenden Figuren 1 bis 8 dargestellt. Die Schnittlinie A-A stellt einen Schnitt durch die Längserstreckung der Luftablenkvorrichtung und die Schnittlinie B-B einen Schnitt quer zur Richtung der Längserstreckung dar.

In der Querschnittsdarstellung gemäß Schnitt A-A ist in Fig. 10 der Aufbau der Luftablenkvorrichtung im Detail dargestellt. Die Luftablenkvorrichtung umfasst ein längliches Ablenkschild 1 mit größerer Längserstreckung L als die Quererstreckung Q zum Ablenken von Luft, dass zwischen einer Nichtgebrauchsstellung R und zumindest einer Gebrauchsstellung E, E' reversibel in Längs- und / oder Höhenrichtung des Kraftfahrzeugs verfahrbar ist. Die Luftablenkvorrichtung umfasst ferner eine Linear-Antriebseinheit 3 mit einem Antriebsaggregat 4 zum Verfahren des Ablenkschildes 1 und umfasst eine Tragstruktur 5 zur Verbindung des Ablenkschildes 1 mit dem Kraftfahrzeug sowie wenigstens eine Lagervorrichtung 2, die das Ablenkschild 1 mit der Tragstruktur 5 verbindet und auf welcher das Ablenkschild 1 in Relation zu dem Kraftfahrzeug verfahrbar gelagert ist. Zusätzlich ist ein längliches und biegsames Kraftübertragungselement 6 zur Übertragung und Weiterleitung von Schubkräften und Zugkräften der Linear-Antriebseinheit 3 vorgesehen. Ein erster Abschnitt 7 des Kraftübertragungselements 6 ist zur Übertragung der linearen Verstellbewegung der Linear-Antriebseinheit 3 mit der Linear-Antriebseinheit 3 verbunden. Zum Verfahren des Ablenkschildes ist ein von dem ersten Abschnitt 7 beabstandeter zweiter Abschnitt 8 des Kraftübertragungselementes 6 über ein Verbindungsmittel 9 mit der Lagervorrichtung 2 verbunden. Das Kraftübertragungselement 6 ist innerhalb einer Führungskulisse 10 geführt und reversibel verfahrbar, wobei die Führungskulisse derart ausgebildet ist, dass das Kraftübertragungselement 6 durch die Führungskulisse 10 wenigstens eine Umlenkung erfährt, sodass die lineare Verstellbewegung der Linear-Antriebseinheit gleichermaßen umgelenkt wird. Vorliegend weist die Linear-Antriebseinheit 3 wenigstens einen Spindelantrieb 11 mit zwei Leitspindeln 12 und 12' auf, wobei der jeweils erste Abschnitt 7 des Kraftübertragungselements 6 zur Übertragung der linearen Verstellbewegung über eine Antriebsmutter 13 jeweils mit einer der Leitspindeln 12 und 12' des Spindelantriebs 11 verbunden ist. Vorliegend sind zwei Kraftübertragungselemente 6, wenigstens zwei Führungskulissen 10, wenigstens zwei Lagervorrichtungen 2 und wenigstens zwei Leitspindeln 12 und 12' vorgesehen, wobei die Kraftübertragungselemente 6 jeweils in unterschiedlichen Führungskulissen 10 geführt sind und die ersten Abschnitte 7 der Kraftübertragungselemente 6 jeweils mit unterschiedlichen Leitspindeln 12 und 12' verbunden sind und die zweiten Abschnitte 8 der beiden Kraftübertragungselemente 6 jeweils mit unterschiedlichen Lagervorrichtungen 2 verbunden sind. Eine Leitspindel 12 weist ein linksdrehendes Gewinde und die wenigstens zweite Leitspindel 12' ein rechtsdrehendes Gewinde auf und die beiden Leitspindeln 12 und 12' sind gleichzeitig mit demselben Antriebsaggregat 4 in Drehung versetzbar.

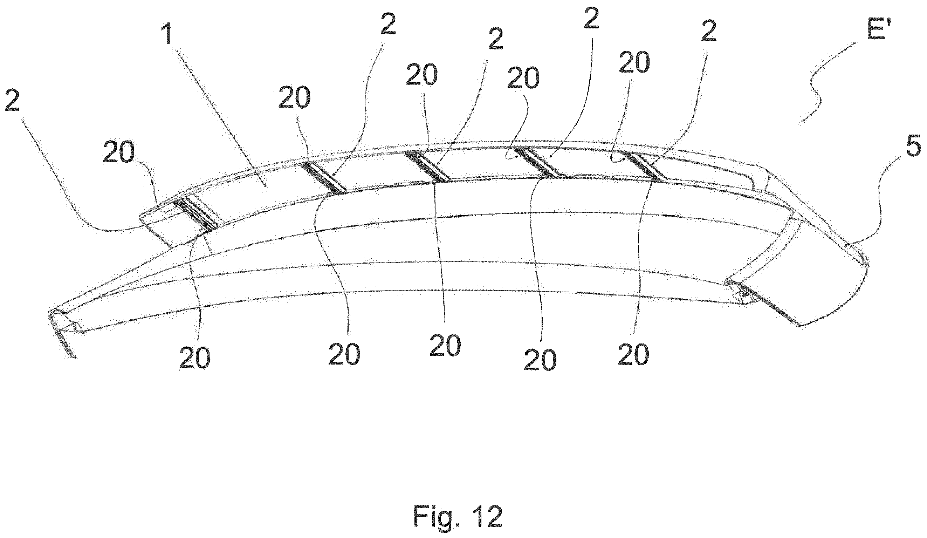

In Fig. 12 ist in einer alternativen Version der Luftablenkvorrichtung ersichtlich, dass das Ablenkschild 1 über lösbare Verbindungsmittel 20 mit den Lagervorrichtungen 2 verbunden sein kann, wobei in wenigstens einer der zumindest einen Gebrauchsstellung E' die Verbindungsmittel 20 von außen zugänglich und lösbar sind. Ansonsten weist diese Luftablenkvorrichtung bevorzugt die bereits vorstehend beschriebenen Merkmale auf.

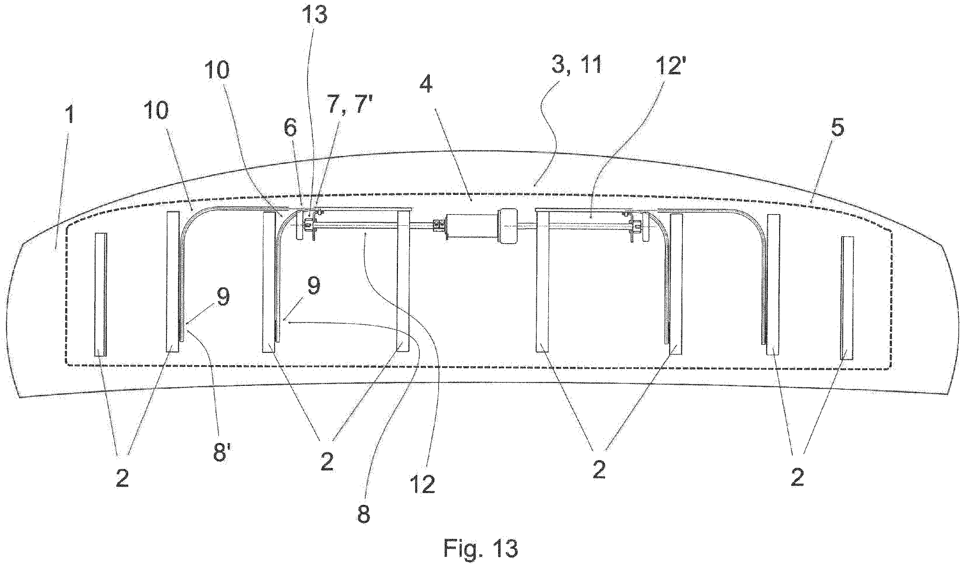

In Fig. 13 ist eine weitere Variante einer Luftablenkvorrichtung dargestellt, wobei hier im Unterschied zu den bisher gezeigten Luftablenkvorrichtungen die Kraftübertragungselemente 6 mehrgliedrig aufgeteilt sind, wobei ein erster gemeinsamer Abschnitt 7, 7' des mehrgliedrigen Kraftübertragungselementes 6 mit der Linear-Antriebseinheit 3, insbesondere mit einer der Leitspindeln 12 oder 12' des Spindelantriebes 11 verbunden ist und zumindest die zweiten Abschnitte 8, 8' des mehrgliedrigen Kraftübertragungselementes 6 innerhalb von separaten Führungskulissen 10 geführt und verfahrbar sind. Die Luftablenkvorrichtung ist weitgehend symmetrisch aufgebaut, wobei sich wieder analog zu den bisher gezeigten Ausführungsbeispielen die Leitspindeln 12 und 12' dahingehend unterscheiden, dass eine ein linksdrehendes- und die andere ein rechtsdrehendes Gewinde aufweist. Die Tragstruktur 5 sowie das Ablenkschild 1 sind hier lediglich schematisch angedeutet.

Die folgenden Merkmale sind für alle vorstehend beschriebenen Ausführungsbeispiele anwendbar.

Das Kraftübertragungselement 6 kann stangenförmig, wellenförmig oder bandförmig ausgebildet sein. Das Kraftübertragungselement 6 kann aus einem metallischen Werkstoff bestehen, insbesondere aus einem Federstahl bestehen. Die Tragstruktur 5 kann zusätzlich zur Aufnahme und Halterung der Linear-Antriebseinheit 3 dienen. Die wenigstens eine Lagervorrichtung 2 kann eine Gleitschiene, eine Führungsprofil, ein Gleitprofil, eine Riemenführung, eine Kettengleitschiene, eine Walzengleitschiene, eine Teleskopschiene, eine Rollenschiene, eine Kugelrollenschiene und/oder eine Kugellagerschiene umfassen. Die wenigstens eine Lagervorrichtung 2 kann einen winklig oder bogenförmig ansteigenden End- und/oder Mittelabschnitt aufweist. Die Tragstruktur 5 und/oder das Ablenkschild 1 können aus einem polymeren Werkstoff oder aus unterschiedlichen polymeren Werkstoffen bestehen. Der polymere Werkstoff kann insbesondere einen thermoplastischen Werkstoff umfassen. Die Führungskulisse 10 oder die Führungskulissen 10 können elliptisch, kurvenförmig, bogenförmig und/oder teilkreisbogenförmig ausgebildet sein. Die Führungskulisse 10 oder die Führungskulissen 10 können einteilig mit der Tragstruktur 5 oder mit dem Ablenkschild 1 ausgebildet und/oder stoffschlüssig mit der Tragstruktur 5 oder mit dem Ablenkschild 1 verbunden sein. Die Führungskulisse 10 oder die Führungskulissen 10 können auch gemeinsam durch einen Teilbereich der Tragstruktur 5 und durch einen Teilbereich des Ablenkschildes 1 ausgebildet sein. Die Führungskulisse 10 oder die Führungskulissen 10 können ebenfalls aus einem polymeren Werkstoff bestehen. Die Führungskulisse 10 oder die Führungskulissen 10 können insbesondere abschnittsweise oder vollständig aus einem anderen polymeren Werkstoff als dem polymeren Werkstoff der Tragstruktur 5 und/oder des Ablenkschildes 1 gebildet sein. Der polymere Werkstoff der Führungskulisse 10 oder der Führungskulissen 10 oder der andere polymere Werkstoff kann Polyamid, Polyimid, Polyoxymethylen, Polyacetal, Polyurethan, Polyvinylchlorid, Polyvinylidenfluorid und/oder Polytetrafluorethylen umfassen. Prinzipiell ist es auch möglich, dass die Führungskulisse 10 oder die Führungskulissen 10 aus einem metallischen Werkstoff besteht oder bestehen. Neben einem Elektromotor oder einem Spindelmotor kann das Antriebsaggregat 4 auch einen Hydraulikzylinder, einen Pneumatikzylinder, einen Zahnstangenantrieb oder einen Linearspindelantrieb umfassen. Die Tragstruktur 5 kann als Teil einer Heckklappe oder als Teil einer Dachstruktur oder als ein eigenständiges Element ausgebildet sein. Die Führungskulisse 10 oder die Führungskulissen 10 können so ausgebildet sein, dass das Kraftübertragungselement 6 oder das die Kraftübertragungselemente 6 in einem Winkel von 30° bis 120°, bevorzugt 45° bis 105°, besonders bevorzugt 60° bis 90° zu der Richtung der linearen Verstellbewegung der Linear-Antriebseinheit 3 umgelenkt werden.

Sämtliche Luftablenkvorrichtungen können Teil eines Kraftfahrzeuges sein.

## Patentansprüche

1. Luftablenkvorrichtung, insbesondere Heckspoiler, für ein Kraftfahrzeug umfassend:
- ein längliches Ablenkschild (1) mit größerer Längserstreckung (L) als Quererstreckung (Q) zum Ablenken von Luft, das zwischen einer Nichtgebrauchsstellung (R) und zumindest einer Gebrauchsstellung (E, E') reversibel in Längs- und/oder Höhenrichtung des Kraftfahrzeuges verfahrbar ist und
- wenigstens eine Linear-Antriebseinheit (3) mit einem Antriebsaggregat (4) zum Verfahren des Ablenkschildes (1), und
- eine Tragstruktur (5) zur Verbindung des Ablenkschildes (1) mit dem Kraftfahrzeug, und
- wenigstens eine Lagervorrichtung (2), die das Ablenkschild (1) mit der Tragstruktur (5) verbindet und auf welcher das Ablenkschild (1) in Relation zu dem Kraftfahrzeug verfahrbar gelagert ist,
**dadurch gekennzeichnet, dass**
wenigstens ein längliches und biegsames Kraftübertragungselement (6) zur Übertragung und Weiterleitung von Schubkräften und Zugkräften der Linear-Antriebseinheit (3) vorgesehen ist,
wobei ein erster Abschnitt (7) des Kraftübertragungselementes (6) zur Übertragung der linearen Verstellbewegung der Linear-Antriebseinheit (3) mit der Linear-Antriebseinheit (3) verbunden ist und,
wobei zum Verfahren des Ablenkschildes (1) ein von dem ersten Abschnitt (7) beabstandeter zweiter Abschnitt (8) des Kraftübertragungselementes (6) mit der Lagervorrichtung (2) und/oder mit dem Ablenkschild (1) verbunden ist und/oder mit der Lagervorrichtung (2) und/oder mit dem Ablenkschild (1) in Wirkverbindung steht und,
dass das Kraftübertragungselement (6) innerhalb einer Führungskulisse (10) geführt und reversibel verfahrbar ist, wobei die Führungskulisse (10) derart ausgebildet ist, dass das Kraftübertragungselement (6) durch die Führungskulisse (10) wenigstens eine Umlenkung erfährt, sodass die lineare Verstellbewegung der Linear-Antriebseinheit (3) gleichermaßen umgelenkt wird.

2. Luftablenkvorrichtung nach Anspruch 1, **dadurch gekennzeichnet, dass** die Linear-Antriebseinheit (3) wenigstens einen Spindelantrieb (11) mit wenigstens einer Leitspindel (12, 12') aufweist, und der erste Abschnitt (7) des Kraftübertragungselementes (6) zur Übertragung der linearen Verstellbewegung über eine Antriebsmutter (13) mit der Leitspindel (12, 12') des Spindelantriebs (11) verbunden ist.

3. Luftablenkvorrichtung nach Anspruch 2, **dadurch gekennzeichnet, dass** die Leitspindel (12) in einem Winkel zwischen 0° bis 60°, bevorzugt 0° bis 45°, besonders bevorzugt 0° bis 30° zur Richtung der Längserstreckung L des Ablenkschilds (1) angeordnet ist.

4. Luftablenkvorrichtung nach einem der vorstehenden Ansprüche, **dadurch gekennzeichnet, dass** das Kraftübertragungselement (6) stangenförmig, wellenförmig oder bandförmig ausgebildet ist.

5. Luftablenkvorrichtung nach einem der vorstehenden Ansprüche, **dadurch gekennzeichnet, dass** das Kraftübertragungselement (6) mehrgliedrig aufgeteilt ist, wobei ein erster gemeinsamer Abschnitt (7, 7') des mehrgliedrigen Kraftübertragungselementes (6) mit der Linear-Antriebseinheit (3), insbesondere mit der Leitspindel (12) des Spindelantriebs (11), verbunden ist und zumindest die zweiten Abschnitte (8, 8') des mehrgliedrigen Kraftübertragungselementes (6) innerhalb von separaten Führungskulisse (10) geführt und verfahrbar sind.

6. Luftablenkvorrichtung nach einem der vorstehenden Ansprüche, **dadurch gekennzeichnet, dass** das Ablenkschild (1) über wenigstens ein lösbares Verbindungsmittel (20) mit der wenigstens einer Lagervorrichtung (2) verbunden ist und in wenigstens einer der zumindest einen Gebrauchsstellung (E') das Verbindungsmittel (20) von außen zugänglich und lösbar ist.

7. Luftablenkvorrichtung nach einem der vorstehenden Ansprüche, **dadurch gekennzeichnet, dass** die wenigstens eine Lagervorrichtung (2) eine Gleitschiene, eine Führungsprofil, ein Gleitprofil, eine Riemenführung, eine Kettengleitschiene, eine Walzengleitschiene, eine Teleskopschiene, eine Rollenschiene, eine Kugelrollenschiene und/oder eine Kugellagerschiene umfasst.

8. Luftablenkvorrichtung nach einem der vorstehenden Ansprüche, **dadurch gekennzeichnet, dass** die wenigstens eine Lagervorrichtung (2) einen winklig oder bogenförmig ansteigenden End- und/oder Mittelabschnitt aufweist.

9. Luftablenkvorrichtung nach einem der vorstehenden Ansprüche 2 bis 8, **dadurch gekennzeichnet, dass** wenigstens zwei Kraftübertragungselemente (6), wenigstens zwei Führungskulissen (10), wenigstens zwei Lagervorrichtungen (2) und wenigstens zwei Leitspindeln (12, 12') vorgesehen sind, wobei die Kraftübertragungselemente (6) jeweils in unterschiedlichen Führungskulissen (10) geführt sind und die ersten Abschnitte (7) der Kraftübertragungselemente (6) jeweils mit unterschiedlichen Leitspindeln (12, 12') verbunden sind und die zweiten Abschnitte (8) der beiden Kraftübertragungselemente (6) jeweils mit unterschiedlichen Lagervorrichtungen (2) und/oder unterschiedlichen Bereichen des Ablenkschildes (1) verbunden sind und/oder mit unterschiedlichen Lagervorrichtungen (2) und/oder mit unterschiedlichen Bereichen des Ablenkschildes (1) in Wirkverbindung stehen.

10. Luftablenkvorrichtung nach Anspruch 9, **dadurch gekennzeichnet, dass** eine Leitspindel (12) ein linksdrehendes Gewinde und die wenigstens zweite Leitspindel (12') ein rechtsdrehendes Gewinde aufweist und die beiden Leitspindeln (12, 12') gleichzeitig mit demselben Antriebsaggregat (4) in Drehung versetzbar sind.

11. Luftablenkvorrichtung nach einem der vorstehenden Ansprüche, **dadurch gekennzeichnet, dass** die Führungskulisse (10) oder die Führungskulissen (10) elliptisch, kurvenförmig, bogenförmig und/oder teilkreisbogenförmig ausgebildet ist oder sind.

12. Luftablenkvorrichtung nach einem der vorstehenden Ansprüche, **dadurch gekennzeichnet, dass** die Führungskulisse (10) oder die Führungskulissen (10) einteilig mit der Tragstruktur (5) oder mit dem Ablenkschild (1) ausgebildet und/oder stoffschlüssig mit der Tragstruktur (5) oder mit dem Ablenkschild (1) verbunden ist oder sind.

13. Luftablenkvorrichtung nach einem der vorstehenden Ansprüche 1 bis 11, **dadurch gekennzeichnet, dass** die Führungskulisse (10) oder die Führungskulissen (10) gemeinsam durch einen Teilbereich der Tragstruktur (5) und durch einen Teilbereich des Ablenkschildes (1) ausgebildet ist oder sind.

14. Luftablenkvorrichtung nach einem der vorstehenden Ansprüche, **dadurch gekennzeichnet, dass** die Führungskulisse (10) oder die Führungskulissen (10) so ausgebildet sind, dass das Kraftübertragungselement (6) oder das die Kraftübertragungselemente (6) in einem Winkel von 30° bis 120°, bevorzugt 45° bis 105°, besonders bevorzugt 60° bis 90° zu der Richtung der linearen Verstellbewegung der Linear-Antriebseinheit (3) umgelenkt werden.

15. Luftablenkvorrichtung nach einem der vorstehenden Ansprüche, **dadurch gekennzeichnet, dass** der zweite Abschnitt (8) des Kraftübertragungselementes (6) über ein Verbindungsmittel (9) mit der Lagervorrichtung (2) und/oder mit dem Ablenkschild (1) verbunden ist und/oder mit der Lagervorrichtung (2) und/oder mit dem Ablenkschild (1) in Wirkverbindung steht.
